# FASCICULE DE BREVET EUROPEEN

(11) **EP 2 978 697 B1**
(45) Date de publication et mention de la délivrance du brevet: **13.09.2017**
(21) Numéro de dépôt: 14712286.5
(22) Date de dépôt: 24.03.2014
(51) Int. Cl.: B65G 47/53, B65G 47/68

(54) **PROCEDE ET SYSTEME DE TRANSFERT D'OBJETS**
VERFAHREN UND SYSTEM ZUM TRANSPORTIEREN VON OBJEKTEN
METHOD AND SYSTEM FOR TRANSPORTING OBJECTS

(30) Priorité: 25.03.2013 FR 1352628
(43) Date de publication de la demande: 03.02.2016
(73) Titulaire: Gebo Packaging Solutions France, 67116 Reichstett (FR)
(72) Inventeur: PETROVIC, Zmaj, F-67455 Mundolsheim Cedex (FR)
(74) Mandataire: Eltzer, Thomas
(86) Numéro de dépôt international: PCT/EP2014/055792
(87) Numéro de publication internationale: WO 2014/154608

(56) Documents cités:
- EP-A1- 2 520 521
- EP-A2- 1 717 533
- JP-A- H11 301 841
- JP-U- S52 134 977
- US-B1- 6 202 827

## Description

### DOMAINE DE L'INVENTION

L'invention a trait au domaine des systèmes et des procédés de transferts d'objets convoyés, et en particulier les systèmes de transfert entre deux convoyeurs, notamment pour transférer des objets disposés en rangée.

L'invention concerne notamment le transfert d'objets de type bouteilles ou briques, ayant des dimensions telles qu'ils sont facilement déstabilisés, entre deux convoyeurs ayant des directions de convoyage sensiblement perpendiculaires.

### ETAT DE LA TECHNIQUE

Dans le domaine du convoyage, le transfert d'objets depuis un accumulateur vers un convoyeur de sortie soulève plusieurs problèmes. On va présenter ici, à l'aide d'un exemple de l'état de la technique, les principaux problèmes rencontrés.

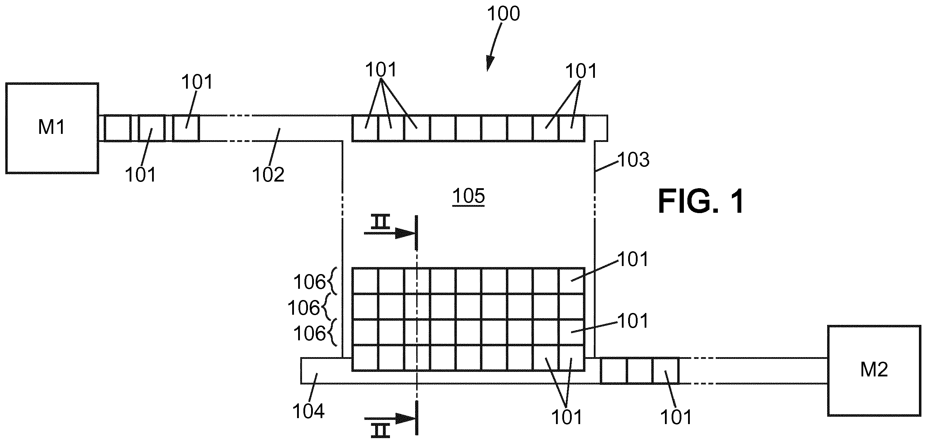

Sur la figure 1, il est représente une ligne **100** de traitement d'objets **101,** par exemple des bouteilles, comprenant successivement une machine M1 amont, par exemple une étiqueteuse de bouteilles, un convoyeur **102** d'entrée monoligne, un accumulateur **103,** un convoyeur **104** de sortie monoligne, et une machine aval M2, par exemple une fardeleuse. Le convoyeur 102 d'entrée amène les bouteilles 101 sur une surface **105** d'accumulation de l'accumulateur 103. Les bouteilles 101 peuvent alors être stockées temporairement en cas, par exemple, de défaillance de la machine M2 aval.

Les bouteilles 101 sont stockées par rangée **106** sur la surface 105 d'accumulation. La longueur des rangées 106 dépend notamment des cadences de production, de la largeur des objets 101 et du temps de cycle de l'accumulateur 103 pour mettre en place une rangée 106 depuis le convoyeur 102 d'entrée sur la surface 105 d'accumulation et aller chercher la rangée 106 suivante sur le convoyeur 102 d'entrée.

Ainsi, par exemple, lorsque la cadence de production est de 30 000 objets par heure, pour des objets de type brique de petit contenant, environ 20 mL (millilitres),de 50 mm (millimètres) de largeur, la vitesse de convoyage en entrée et en sortie est d'environ 0,4 m/s (mètres par seconde). Ainsi, pour un temps de cycle de 5 s (secondes), la largeur de la rangée doit être de 2 m (mètres) environ.

Dans une autre application pour des objets de types bouteilles de plus grand contenant, environ 1,5 L (litres), de largeur de 110 mm, la cadences approche souvent les 80 000 objets par heure. La vitesse de convoyage est d'environ 2,5 m/s. Pour un même temps de cycle de 5 s, la longueur de la rangée sur la surface d'accumulation doit donc être de 12,5 m environ.

Par conséquent, pour des objets de type bouteilles, non seulement les vitesses de convoyage sont-elles élevées, mais également la longueur des rangées sur la surface 105 d'accumulation est importante.

Pour transférer les objets 101 de la surface d'accumulation 105 au convoyeur 104 de sortie, la surface 105 d'accumulation est par exemple portée par un convoyeur **107** dont la direction de convoyage est sensiblement perpendiculaire à la direction de convoyage des convoyeurs 102, 104 d'entrée et de sortie. La surface 105 d'accumulation est sensiblement coplanaire avec la surface de convoyage du convoyeur 104 de sortie. Les rangées 106 d'objets sont au contact les unes avec les autres sur la surface 105 d'accumulation.

Lorsque le convoyeur 107 de l'accumulateur 103 est mis en fonctionnement, la rangée 106 la plus en aval sur le convoyeur 107 de l'accumulateur 103 est poussée sur le convoyeur 104 de sortie par les rangées 106 qui la suivent.

Un double problème se présente alors.

Tout d'abord, les dimensions des bouteilles 101, qui sont des objets dont la hauteur est la plus grande de ses dimensions, en font des objets instables, c'est-à-dire qu'ils peuvent se renverser plus facilement sous l'effet de secousses par exemple, mais doivent cependant être convoyés à des vitesses supérieures à celles d'objets plus stables car plus courts, de type brique. Ainsi, lors du transfert entre l'accumulateur 103 et le convoyeur 104 de sortie, les bouteilles 101 peuvent se renverser.

De plus, dans le cas de bouteilles 101 en matériaux thermoplastiques, elles sont des objets compressibles, de sorte que les bouteilles 101 entre deux rangées 106 successives ne sont précisément alignées dans la direction de convoyage sur la surface 105 d'accumulation. Cet écart peut se révéler important relativement à la largeur des bouteilles, typiquement entre 5 et 10 cm (centimètres). Ce décalage se retrouve principalement à l'extrémité **108** aval, dans le sens de convoyage du convoyeur 102 d'entrée, des rangées 106. Ainsi, lorsqu'une rangée 106 pousse sur une autre rangée 106 à transférer, les efforts exercés sur la bouteille 101 à l'extrémité 108 aval de la rangée 106 à transférer ne sont pas uniformes sur la bouteille 101, laquelle se met à pivoter, voire se renverse.

La désorganisation engendrée par le pivotement et/ou le renversement de cette seule bouteille 101 peut se répercuter sur les bouteilles 101 voisines de la rangée 106, voire aussi sur les bouteilles des rangées 106 suivantes sur la surface 105 d'accumulation. Les bouteilles ne sont donc plus disposées en rangée lorsqu'elles sont transférées sur le convoyeur 104 de sortie, ce qui peut provoquer des blocages des convoyeurs 102, 104, 107.

Par ailleurs, quelque soit le type d'objets à transférer, il est toujours nécessaire d'avoir au moins une rangée sur la surface d'accumulation, et de préférence deux rangées, qui pousse sur la rangée à transférer, afin que l'effort exercé par les rangées amont soit suffisant pour déplacer la rangée à transférer jusque sur le convoyeur de sortie.

Ainsi, il n'est pas possible de vider complètement l'accumulateur, et une intervention extérieure est nécessaire pour retirer les dernières rangées.

Bien que ces problèmes existent en particulier pour le transfert en sortie d'accumulateur, ils peuvent également se retrouver lors tout transfert entre deux convoyeurs. Les documents JP S52 134977 U et EP 2 520 521 A1 décrivent une zone de transfert entre convoyeurs utilisant un contact avec un guide pour contrôler le mouvement des articles à transférer. Par conséquent, il existe un besoin pour un nouveau dispositif de transfert surmontant notamment les inconvénients précités.

### OBJET ET RESUME DE L'INVENTION

Un premier objet de la présente invention est donc de proposer un dispositif de transfert garantissant un transfert continu d'objets depuis un convoyeur d'amenée, tel que le convoyeur d'un accumulateur, vers une surface de réception par exemple d'un convoyeur de sortie, indépendamment du nombre d'objets présents sur le convoyeur d'amenée.

Un deuxième objet de l'invention est de proposer un dispositif de transfert permettant de conserver l'orientation des objets pendant le transfert.

Un troisième objet de l'invention est de proposer un dispositif de transfert permettant de conserver les rangées d'objets pendant le transfert.

Un quatrième objet de l'invention est de proposer un dispositif de transfert limitant les coûts.

Selon un premier aspect, l'invention porte sur un procédé de transfert d'au moins un objet depuis une surface de convoyage d'un convoyeur d'amenée vers une surface de réception adjacente à une ligne d'extrémité aval du convoyeur d'amenée dans la direction de convoyage. La surface de réception est décalée de la surface de convoyage vers le bas selon une direction verticale. Le procédé comprend alors les étapes suivantes :
- le convoyage de l'objet dans une direction de convoyage, l'objet comprenant une base qui repose sur la surface de convoyage,
- la mise en contact de l'objet avec un guide placé dans la direction de convoyage à distance de la ligne d'extrémité aval du convoyeur d'amenée,
- l'abandon du contact entre la base de l'objet et la surface de convoyage,
- la chute de l'objet jusqu'à la surface de réception.

L'étape d'abandon du contact entre la base de l'objet et la surface de convoyage n'a lieu qu'après l'étape de mise en contact de l'objet avec le guide.

De préférence, pendant l'étape d'abandon du contact entre la base de l'objet et la surface de convoyage et pendant l'étape de chute de l'objet jusqu'à la surface de réception, le contact entre l'objet et le guide est conservé.

Le procédé peut en outre comprendre une étape d'évacuation de l'objet de la surface de réception. Par exemple, la surface de réception est portée par un convoyeur de sortie, le convoyeur de sortie étant à l'arrêt lors de la réception de l'objet sur la surface de réception, puis étant en fonctionnement lors de l'évacuation de l'objet. En variante, la surface de réception est portée par un convoyeur de sortie, le convoyeur de sortie étant en fonctionnement lors de la réception de l'objet sur la surface de réception.

Selon un mode de réalisation, le procédé comprend une étape de déstabilisation de l'objet sur la surface de convoyage avant l'étape de mise en contact avec le guide, le guide étant placé de sorte que, lorsque l'objet est mis en contact avec le guide, le guide est au-dessus d'un centre de gravité de l'objet.

Le procédé peut être mis en oeuvre pour une rangée d'objets, la rangée s'étendant dans une direction transversale, perpendiculaire à la direction de convoyage du convoyeur d'amenée. Les étapes du procédé sont alors avantageusement effectuées simultanément pour tous les objets de la rangée.

Dans ce cas, plusieurs rangées peuvent être disposées sur la surface de convoyage du convoyeur d'amenée. La distance entre les rangées est déterminée pour que l'étape de chute d'une rangée d'objets n'ait lieu qu'après une étape d'évacuation de la rangée d'objets précédemment transférée sur la surface de réception.

Selon un deuxième aspect, l'invention porte sur un système de transfert d'au moins un objet depuis une surface de convoyage sur une surface de réception d'après le procédé tel que présenté ci-dessus. Le système comprend un convoyeur d'amenée portant la surface de convoyage, l'objet reposant par une base sur la surface de convoyage. La surface de convoyage présente une portion principale qui s'étend dans une direction de convoyage, et une portion inclinée, dans le prolongement en aval de la portion principale dans la direction de convoyage, la portion inclinée étant inclinée par rapport à la direction de convoyage, vers le bas selon une direction verticale. La surface de réception est adjacente selon la direction de convoyage à une ligne d'extrémité aval du convoyeur d'amenée, l'objet pouvant reposer par sa base sur la surface de réception.

De plus, la surface de réception est décalée de la surface de convoyage vers le bas selon la direction verticale.

Le dispositif de transfert comprend en outre :
- au moins un guide, situé à distance selon la direction de convoyage de la ligne d'extrémité du convoyeur d'amenée, la surface de réception s'étendant alors au moins partiellement dans la direction longitudinale entre la ligne d'extrémité et le guide,
- des moyens pour régler la distance entre le guide et la ligne d'extrémité aval du convoyeur d'amenée et des moyens pour régler la position de la surface de réception par rapport à la portion principale de la surface de convoyage de sorte que le système de transfert est apte à mettre en oeuvre le procédé tel que présenté ci-dessus.

Selon un exemple d'application, la surface de réception est portée par un convoyeur de sortie dont la direction de convoyage est perpendiculaire à la direction de convoyage du convoyeur d'amenée.

Selon un mode de réalisation particulier, le guide comprend deux portions, une première portion étant située au-dessus du centre de gravité de l'objet lorsque l'objet repose sur la surface de convoyage et une deuxième portion étant située plus près de la surface de réception selon la direction verticale que la première portion.

Avantageusement, le convoyeur d'amenée est apte à convoyer au moins une rangée d'objets s'étendant selon une direction transversale à la direction de convoyage, sur la surface de réception. Le guide s'étend alors dans la direction transversale, sur une dimension correspondant au moins à la longueur transversale de la au moins une rangée d'objets.

Selon un exemple d'application, le convoyeur d'amenée est un convoyeur d'un accumulateur entre un convoyeur d'entrée convoyant des objets en sortie d'une machine amont, et un convoyeur de sortie convoyant des objets jusqu'à l'entrée d'une machine aval.

Par exemple, le convoyeur d'amenée peut être un convoyeur à bande sans fin s'enroulant autour d'au moins un tambour aval portant la ligné d'extrémité aval du convoyeur d'amenée.

### BREVE DESCRIPTION DES DESSINS

D'autres objets et avantages apparaitront à la lumière de la description faite ci-après en référence aux dessins annexés, dans lesquels :
- la figure 1 est une représentation schématique, vue de dessus, d'un accumulateur entre deux machines selon l'état de la technique, un système de transfert entre l'accumulateur et un convoyeur de sortie selon l'état de la technique étant mis en place,
- la figure 2 est une vue en coupe de la figure 1 selon la ligne II-II illustrant le détail du système de transfert,
- les figures 3a à 3c sont des représentations schématiques, vues de dessus, respectivement de quatre étapes de transfert d'objets de forme hexagonale selon l'état de la technique,
- la figure 4 est une représentation schématique, vue de dessus, d'un accumulateur entre deux machines comprenant un système de transfert selon un mode de réalisation de l'invention,
- la figure 5 est une vue en coupe de la figure 4 selon la ligne V-V,
- les figures 6 à 10 sont des représentations schématiques des différentes étapes du transfert d'un objet selon un mode de réalisation, au moyen d'un système de transfert selon l'invention,
- la figure 11 est une représentation schématique d'une première variante du système des figures 6 à 10,
- les figures 12 à 14 sont des représentations schématiques des différentes étapes du transfert d'un objet selon un mode de réalisation, au moyen d'un système de transfert selon l'invention, dans une deuxième variante, pour des objets de type bouteilles.

### DESCRIPTION DETAILLEE

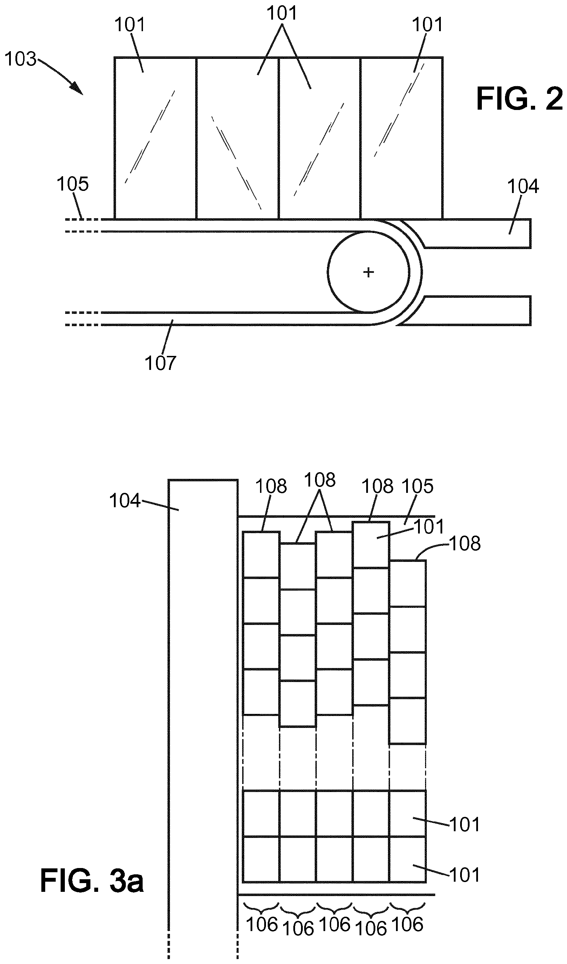

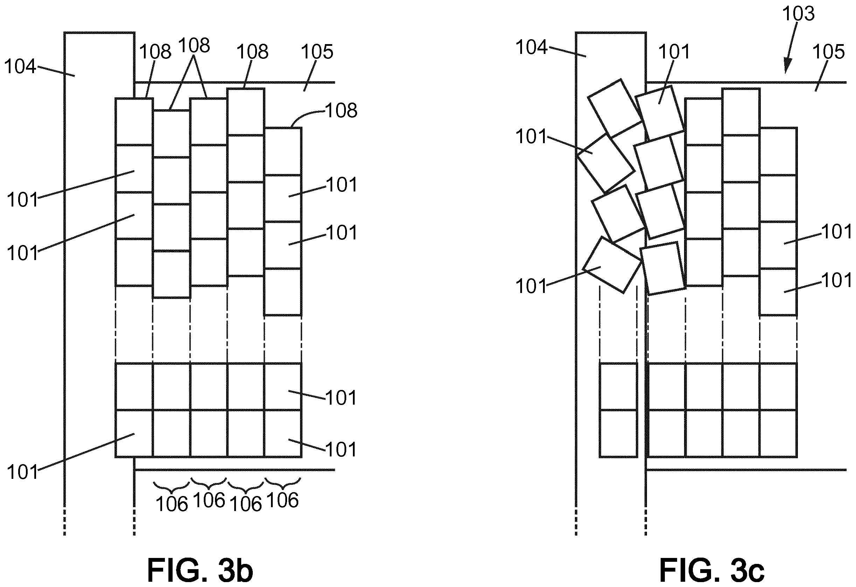

Les figures 1 à 3 ont déjà été décrites en introduction et illustrent un mode de réalisation comportant de nombreux inconvénients comparés au système décrit ci-après.

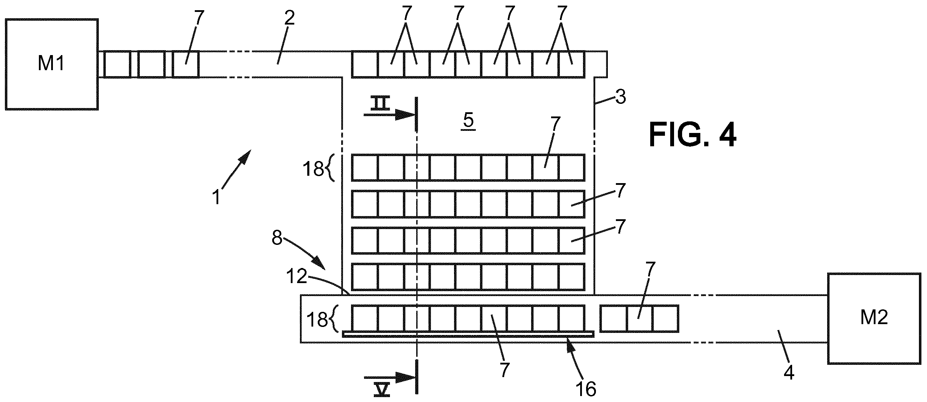

Sur la figure 4, on a représenté en vue de dessus une partie d'une ligne 1 de traitement d'objets **7,** entre une machine **M1** amont et une machine **M2** aval.

Un convoyeur **2** d'entrée s'étend entre la machine M1 amont et un accumulateur **3 ;** un convoyeur **4** de sortie s'étend entre l'accumulateur 3 et la machine M2 aval.

Par exemple, le convoyeur 2 d'entrée et le convoyeur 4 de sortie sont des convoyeurs monovoies, et avancent tous deux dans une même direction, à une même vitesse de convoyage.

L'accumulateur 3 comprend une surface **5** d'accumulation, portée par un convoyeur, qui est appelé également dans la suite convoyeur **6** d'amenée.

Des objets **7** arrivent en file sur le convoyeur 2 d'entrée et entrent dans l'accumulateur, où ils sont disposés en rangée. Des moyens, non représentés ici, permettent d'assurer le transfert depuis le convoyeur 2 d'entrée sur la surface 5 d'accumulation.

La ligne intègre un système **8** de transfert des objets 7 entre, selon l'exemple décrit en référence aux figures, l'accumulateur 3 et le convoyeur 4 de sortie.

Plus précisément, le système de transfert comprend une surface **9** de convoyage, portée par le convoyeur 6 d'amenée. Le convoyeur 6 d'amenée définit une direction de convoyage comprenant au moins une composante selon une direction horizontale longitudinale.

La base 7a de l'objet 7 désigne ici la portion de l'objet en contact avec une surface sur laquelle l'objet 7 repose en équilibre sous l'effet de son poids. Ainsi, la base 7a peut en pratique être une face de l'objet 7, mais également plusieurs faces ou plusieurs points de l'objet 7.

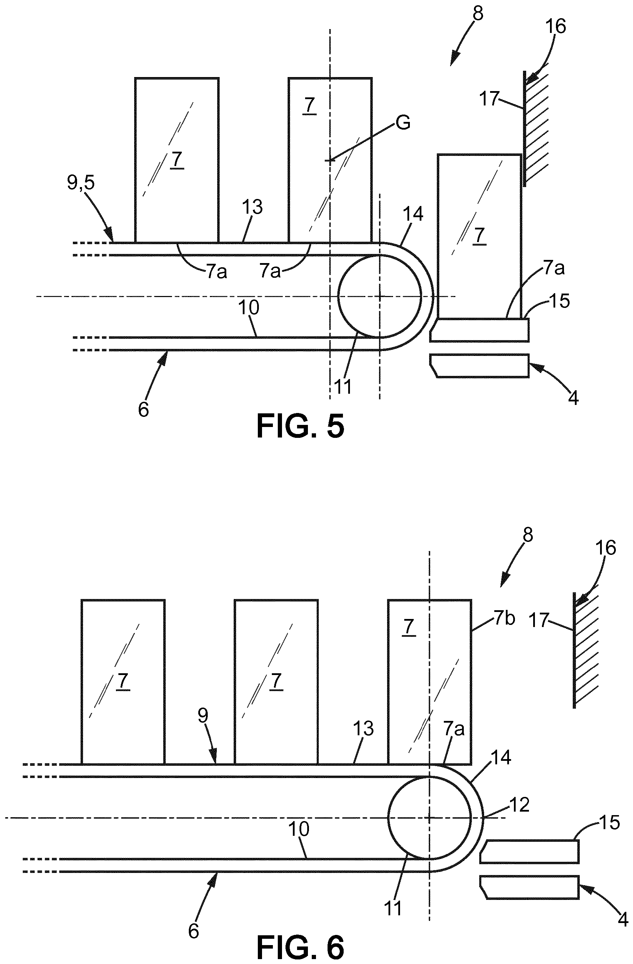

De plus, dans ce qui suit, les termes « dessus », « sur », « vertical », « horizontal » et « bas » seront pris en référence à l'orientation naturelle des figures 5 à 14, lesquelles sont dans un plan vertical, parallèle à la direction de convoyage, et dans lesquelles les objets reposent sous l'effet de leur poids sur la surface 9 de convoyage, qui comprend une portion horizontale.

Selon l'exemple des figures, la surface 9 de convoyage du convoyeur d'amenée 6 est matérialisée par une bande **10** sans fin, s'enroulant autour d'un tambour **11.** Le convoyeur 6 d'amenée peut cependant être tout type de convoyeur, par exemple à chaînes ou à rouleaux. Le convoyeur 6 d'amenée présente une ligne **12** d'extrémité aval, c'est-à-dire la ligne au-delà de laquelle, dans la direction de convoyage, l'objet ne peut plus être en contact avec le convoyeur 6 d'amenée.

La surface 9 de convoyage comprend une première portion **13** principale qui s'étend dans la direction de convoyage, qui est horizontale sur l'exemple des figures 5 à 14 et une portion **14** inclinée, dans le prolongement en aval de la portion 13 principale dans la direction de convoyage. La portion 14 inclinée est inclinée par rapport à la direction de convoyage, vers le bas.

Ainsi, les objets 7 peuvent reposer sur la surface de convoyage par leur base 7a. En d'autres termes, la surface de convoyage présente une inclinaison et des caractéristiques de frottements telles que les objets reposant dessus ne tombent pas, mais demeurent en équilibre sur leur base, et fixes par rapport à la surface de convoyage.

Par « inclinée », on désigne ici la caractéristique selon laquelle le vecteur directeur de la portion 14 inclinée n'est pas perpendiculaire à la direction de convoyage. Comme cela est le cas sur les figures, la portion 14 inclinée peut être une portion courbe, portée par le tambour 11, le vecteur directeur n'étant alors pas constant.

Le système 8 de transfert comprend de plus une surface **15** de réception. La surface 15 de réception est décalée de la portion 13 principale vers le bas selon la direction verticale. Plus précisément, ce décalage est mesuré entre un point situé à la jonction entre la portion 13 principale et la portion 14 inclinée de la surface 9 de convoyage.

Par ailleurs, la surface 15 de réception est adjacente, dans la direction de convoyage, à la ligne 12 d'extrémité aval du convoyeur 6 d'amenée. Ainsi, l'objet 7 se déplaçant dans la direction de convoyage et dépassant la ligne 12 d'extrémité peut venir sur la surface 15 de réception. En d'autres termes, la ligne 12 d'extrémité aval représente la ligne du convoyeur 6 d'amenée la plus en aval et située au-dessus de la surface 15 de réception. Sur les figures 5 à 14, la ligne 12 d'extrémité aval est confondue avec la ligne de retour à partir de laquelle la bande 10 sans fin du convoyeur 6 d'amenée se déplace dans la direction opposée à la direction de convoyage. Toutefois, dépendamment du décalage entre la surface 15 de réception et la portion 13 principale de la surface 9 de convoyage, la ligne 12 d'extrémité aval peut être située au-dessus de la ligne de retour. Toutefois, elle ne peut pas être située en dessous, car l'objet ne peut pas reposer sur la portion de bande 10 se déplaçant dans le sens opposé à la direction de convoyage.

Selon l'exemple des figures 5 à 14, la surface 15 de réception est portée par le convoyeur 4 de sortie et est horizontale.

Pour passer de la surface 9 de convoyage à la surface 15 de réception, l'objet 7 chute alors sous l'effet de son poids.

Le système 8 de transfert comprend enfin au moins un guide **16,** situé à distance de la ligne 12 d'extrémité du convoyeur 6 d'amenée dans la direction de convoyage, de sorte que la surface 15 de réception s'étend au moins partiellement entre la ligne 12 d'extrémité et le guide 16.

Le guide 16 se présente par exemple sous la forme d'une plaque présentant une face **17** frontale, s'étendant dans un plan vertical, parallèle et faisant face à la ligne 12 d'extrémité aval du convoyeur 6 d'amenée. En variante, le guide 16 peut comprendre une pluralité de plaques, la face 17 frontale étant formée de manière discontinue. En variante encore, le guide 16 peut être une barre, la face frontale se réduisant à une ligne.

Les objets 7 pour lesquels le présent système 8 de transfert est particulièrement bien adapté sont des objets dits instables, c'est-à-dire qui peuvent facilement se renverser lorsqu'ils sont écartés de leur position d'équilibre reposant sur leur base 7a. En d'autres termes, ce sont des objets 7 qui présentent une hauteur, c'est-à-dire la dimension selon une direction perpendiculaire à leur base, supérieure à leurs autres dimensions. La répartition de la masse de l'objet 7 est sensiblement uniforme sur la hauteur de l'objet.

Selon un mode de réalisation préféré, la surface 15 de réception est portée par le convoyeur 4 de sortie, dont la direction de convoyage est perpendiculaire à la direction de convoyage du convoyeur 6 d'amenée.

Grâce au système 8 de transfert, il est possible de transférer de tels objets 7 de la surface 9 de convoyage du convoyeur 6 d'amenée à la surface 15 de réception, les objets 7 reposant par leur base 7a aussi bien sur la surface 9 de convoyage avant transfert que sur la surface 15 de réception après transfert.

Ainsi, le procédé pour transférer les objets 7 depuis la surface 9 de convoyage du convoyeur 6 d'amenée vers la surface 15 de réception comprend les étapes suivantes :
- le convoyage de l'objet 7 dans la direction de convoyage, l'objet reposant par sa base 7a sur la surface 9 de convoyage,
- la mise en contact de l'objet 7 avec le guide 16,
- l'abandon du contact entre la base 7a de l'objet et la surface 9 de convoyage,
- la chute de l'objet 7 jusqu'à la surface 15 de réception.

Par chute, on entend ici que le poids est la force principale s'exerçant sur l'objet 7, de sorte qu'un centre **G** de gravité de l'objet décrit, pendant l'étape de chute, une trajectoire sensiblement rectiligne dans la direction verticale vers le bas.

L'étape d'abandon du contact entre la base 7a de l'objet et la surface 9 de convoyage n'a lieu qu'après l'étape de mise en contact de l'objet 7 avec le guide 16.

Ainsi, grâce au guide 16, l'objet 7 à transférer arrive sur la surface 15 de réception en position d'équilibre, sur sa base 7a. Ainsi, l'objet 7 conserve son orientation avant et après transfert, c'est-à-dire en reposant sur sa base 7a.

Par exemple, le procédé peut impliquer une étape de déstabilisation de l'objet 7.

On a représenté sur les figures 6 à 10 les différentes étapes du procédé de transfert avec une déstabilisation de l'objet 7. A des fins illustratives, on a placé une ligne en traits discontinus passant par un centre G de gravité de l'objet, la ligne étant verticale sur mes figures 5 et 6, lorsque l'objet 7 repose sur la portion 13 principale, alors horizontale, de la surface 9 de convoyage.

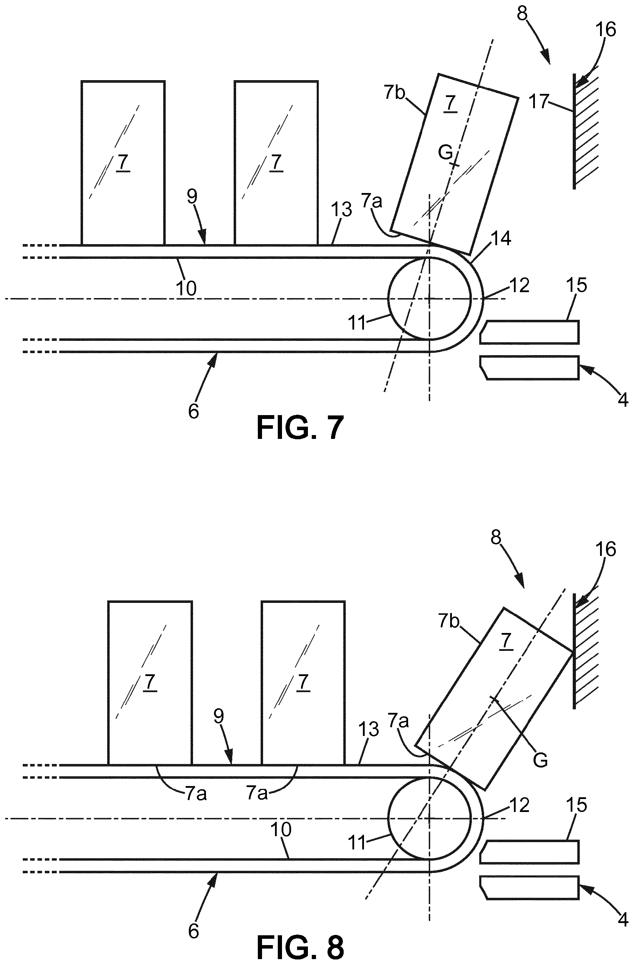

Tout d'abord, l'objet 7 sur la surface 9 de convoyage s'approche de la portion 14 inclinée jusqu'à ce que le centre G de gravité soit aligné verticalement avec le point à la jonction entre la portion 13 principale et la portion 14 inclinée (figure 6). Lorsque le centre G de gravité de l'objet 7 dépasse le point à la jonction entre la portion 13 principale et la portion 14 inclinée de la surface 9 de convoyage (figure 7), l'objet 7 quitte sa position d'équilibre et pivote autour de la direction horizontale transversale. La base 7a est toujours en contact avec la surface 9 de convoyage, sur la portion 14 inclinée. L'objet 7 est alors déstabilisé.

Le pivotement de l'objet 7 ainsi déstabilisé a lieu dans un premier sens, jusqu'au contact avec le guide 16 (figure 8). Le guide 16 est alors avantageusement placé de sorte que le contact avec l'objet 7 se fait au-dessus du centre G de gravité de l'objet 7.

Toutefois, il est envisageable que l'objet 7 ne soit pas déstabilisé, mais que le pivotement dans le premier sens soit simplement la conséquence de l'inclinaison de la portion 14 inclinée de la surface 9 de convoyage.

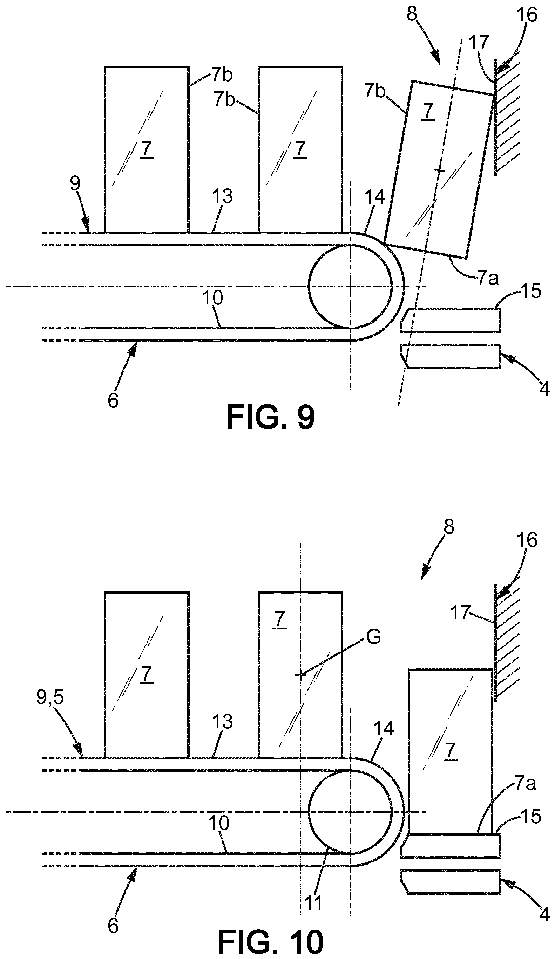

Dès que le contact avec le guide 16 a lieu, l'objet 7 pivote toujours autour de la direction horizontale transversale, mais dans un deuxième sens, opposé au premier, de sorte que l'objet est redressé. Ce deuxième pivotement peut par exemple être amorcé par le mouvement continu du convoyeur d'amenée. En effet, la base 7a de l'objet étant toujours en contact avec la surface 9 de convoyage (figure 9), la surface 9 de convoyage pousse sur la base 7a de l'objet 7 dans la direction de convoyage, provoquant le deuxième pivotement. A cet effet, le coefficient de frottement entre la base 7a de l'objet et la surface 9 de convoyage est adapté pour qu'il n'y ait pas de glissement entre l'objet 7 et la surface 9 de convoyage.

Une fois que le contact avec le guide 16 est réalisé et que le redressement de l'objet 7 est au moins amorcé, c'est-à-dire que l'objet a au moins commencé à pivoter dans le deuxième sens, le contact entre la base 7a et la surface 9 de convoyage peut être abandonné.

L'objet 7 ne repose alors plus sur la surface 9 de convoyage, et peut tomber, dans l'étape de chute, sous l'effet de son propre poids, sur la surface 16 de réception. Comme l'objet 7 a été redressé, il est alors très proche de sa position d'équilibre. Ainsi, l'objet 7 arrive par sa base 7a sur la surface 15 de réception, sur laquelle il peut reposer par sa base 7a, en position d'équilibre (figure 10).

En variante, pendant l'étape d'abandon du contact entre la base 7a de l'objet 7 et la surface 9 de convoyage et pendant au moins une partie de l'étape de chute, et de préférence pendant toute l'étape de chute, de l'objet 7 jusqu'à la surface 16 de réception, le contact entre l'objet 7 et le guide 16 est conservé. Ainsi, lorsque l'objet présente un corps 7b sensiblement perpendiculaire à la base 7a, le corps 7b de l'objet glisse le long du guide 15, assurant la mise en position d'équilibre de l'objet 7, et le maintient de la position d'équilibre, avant la mise en contact sur la surface 16 de réception.

La distance entre le guide 16, plus précisément la face frontale 17, et la ligne 12 d'extrémité, est déterminée en fonction des dimensions de l'objet 7 à transférer, pour que l'objet 7 puisse reposer par sa base 7a sur la surface 15 de réception entre la ligne 13 d'extrémité et le guide 16, tout en permettant l'étape de mise en contact de l'objet 7 avec le guide alors que la base 7a de l'objet 7 est encore en contact avec la surface 9 de convoyage. Ainsi, il a été déterminé qu'en installant le guide 16, et plus précisément la face 17 frontale, a une distance de la ligne d'extrémité aval qui correspond, à un jeu près, à une dimension de l'objet 7, dans la direction horizontale longitudinale, le résultat désiré est atteint.

Par conséquent, le système 8 de transfert comprend des moyens de réglages, non représentés sur les figures, pour régler la distance entre le guide 16 et la ligne 12 d'extrémité. La position du guide est ensuite maintenue pendant le fonctionnement du système 8 de transfert.

Avantageusement, l'objet 7 sur la surface 16 de réception est ensuite évacué. Selon le mode de réalisation préféré et illustré sur les figures, l'évacuation se fait par le convoyage sur le convoyeur 4 de sortie. En première variante, le convoyeur 4 de sortie est en fonctionnement lors de la réception de l'objet 7, de sorte que l'évacuation se fait immédiatement après contact sur la surface 16 de réception. Dans une deuxième variante, le convoyeur 4 de sortie est à l'arrêt lors de la réception de l'objet 7 sur la surface 16 de réception. Puis, le convoyeur 4 de sortie est mis en fonctionnement lors de l'évacuation de l'objet 7. La première variante permet d'obtenir des cadences très élevées. La deuxième variante permet d'assurer la stabilité de l'objet sur la surface 16 de réception avant l'évacuation.

De préférence, et surtout lorsque la surface 16 de réception est portée par le convoyeur 4 de sortie en fonctionnement lors de la réception de l'objet 7, l'objet 7 n'entre en contact avec la surface 16 de réception qu'à la fin de l'étape de chute, de sorte que les pivotements de l'objet 7 ne sont pas entravés par la surface 16 de réception.

A cet effet, le système 8 de transfert comprend des moyens, non représentés sur les figures, pour régler la position de la surface 15 de réception par rapport à la portion 13 principale de la surface 9 de convoyage, en fonction des dimensions de l'objet 7 transférer, pour éviter le contact entre l'objet 7 et la surface 15 de réception avant l'étape de chute. La position de la surface 15 de réception est ensuite maintenue lors du fonctionnement du système 8.

Le procédé et le système 8 de transfert permettent ainsi d'effectuer le transfert des objets rapidement, à des cadences adaptées aux exigences de l'industrie, tout en gardant les objets 7 dans une même position, reposant sur leur base 7a, avant et après transfert.

Par ailleurs, les objets 7 chutent sur la surface 16 de réception sous l'effet de leur propre poids, et non plus sous l'effet de la poussée des objets qui les suivent sur la surface 9 de convoyage. Par conséquent, le procédé de transfert est particulièrement bien adapté au transfert d'une rangée **18** d'objets 7. La rangée 18 s'étend dans une direction transversale, perpendiculaire à la direction de convoyage du convoyeur 6 d'amenée, et les étapes du procédé sont effectuées de préférence simultanément pour tous les objets 7 de la rangée 18.

Ainsi, plusieurs rangées 18 peuvent être disposées sur la surface 9 de convoyage du convoyeur 6 d'amenée. La distance entre les rangées 18 est déterminée pour que l'étape de chute des objets d'une rangée 18 n'ait lieu qu'après l'évacuation complète des objets 7 d'une rangée 18 précédemment transférée. A cet effet, les moyens permettant d'assurer le transfert depuis le convoyeur 2 d'entrée sur la surface d'accumulation 5 sont synchronisés avec la vitesse du convoyeur 6 d'amenée pour obtenir un écart prédéterminé entre les rangées sur la surface 5 d'accumulation.

Dans ce, le guide 16, et plus précisément sa face frontale 17, s'étend sur une dimension horizontale transversale sensiblement égale à la longueur des rangées 18, de sorte que le guide s'étend en vis en vis de l'ensemble des objets 7 de la rangée 18.

Selon un mode de réalisation, les objets 7 à transférer présentent une hauteur et un poids tels que lors de l'étape d'abandon du contact entre la base 7a de l'objet 7 et la surface 9 de convoyage, c'est-à-dire lors du deuxième pivotement, il est nécessaire de stopper le pivotement de l'objet 7. En effet, sous l'effet de la poussée du convoyeur 6 d'amenée, l'énergie cinétique fournie à l'objet 7 peut provoquer le dépassement de la position d'équilibre lors du deuxième pivotement. Dans ce cas, si le guide 16 est trop court, c'est-à-dire si la distance selon la direction verticale entre le guide 16 et la surface 15 de réception est trop faible, l'objet 7 peut, lors du deuxième pivotement, passer sous le guide 16 et ne pas arriver en position d'équilibre sur la surface 15 de réception.

Afin de résoudre ce problème, le guide 16 peut être prolongé verticalement jusqu'au plus près de la surface 14 de réception. Ainsi, une portion inférieure de l'objet, c'est-à-dire la portion du corps 7b de l'objet 7 à proximité de la base 7a, vient en butée contre le guide 16 lors du deuxième pivotement et glisse le long de la face 17 frontale du guide 16 lors de la chute pour arriver en position stable sur la surface 15 de réception.

Comme indiqué précédemment, le guide 16 peut comprendre une pluralité de plaques formant la face 17 frontale. De manière particulièrement avantageuse, le guide 16 comprend deux portions : une portion 16a de retenue et une portion 16b de positionnement. La portion 16a de retenue est placée au-dessus, selon la direction verticale, de la portion 16b de positionnement, laquelle est alors plus proche de la surface 15 de réception. Les moyens pour régler la distance entre le guide 16 et la ligne 12 d'extrémité aval peuvent alors régler la position des portions indépendamment les unes des autres, ou en bloc.

Dans le cas d'objets sensiblement parallélépipédiques, les deux portions, respectivement 16a, 16b, du guide 16 présentent chacune une face frontale, respectivement 17a, 17b, coplanaire entre elles. La portion 16a de retenue assure le contact avec l'objet lors de l'étape de mise en contact avec le guide 16, tandis que la portion 16b stoppe le deuxième pivotement de l'objet 7 lors de l'étape d'abandon du contact entre la base 7a de l'objet 7 et la surface 9 de convoyage et l'étape de chute, assurant que l'objet 7 arrive en position d'équilibre sur la surface 15 de réception.

Dans le cas où les objets 7 ne sont pas parallélépipédiques, les faces frontales, respectivement 17a, 17b, des portions, respectivement 16a, 16b du guide 16 ne sont pas coplanaires, mais sont décalées l'une par rapport à l'autre selon la direction horizontale longitudinale.

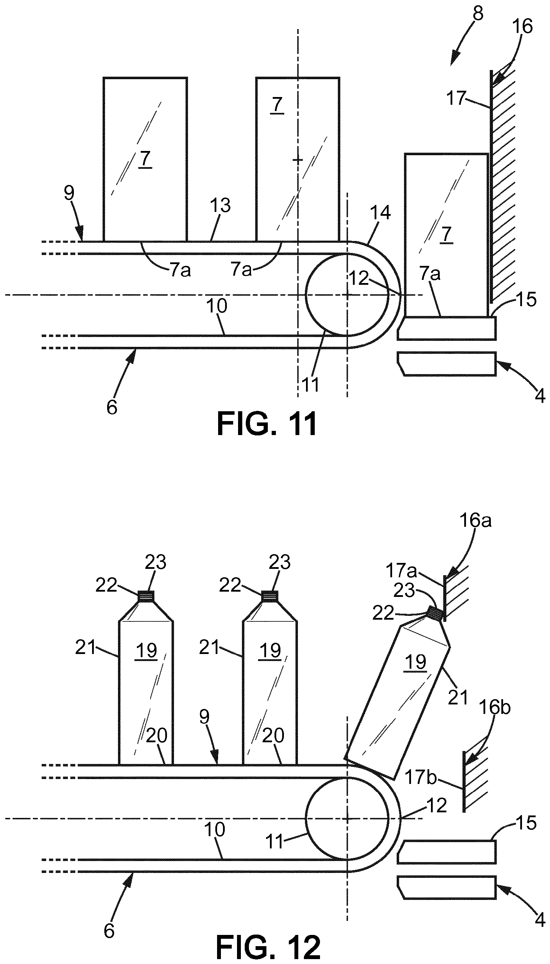

Par exemple, selon une application particulière illustrée sur les figures 12 à 14, les objets 7 à transférer sont des bouteilles **19.** De manière générale, une bouteille 19 n'est pas un objet parallélépipédique, et comprend un fond **20,** faisant ici office de base, un corps **21** sensiblement cylindrique s'étendant perpendiculaire au fond 20, un col **22** de section plus petite que le corps, et attaché au corps 21 par un épaulement, et un buvant **23,** recouvert par un bouchon non représenté. La hauteur de la bouteille 19 mesurée entre le fond 20 et le buvant 23 est supérieure à la largeur mesurée sur son fond 20.

Les deux portions 16a, 16b du guide 16 sont alors décalées l'une par rapport à l'autre selon la direction longitudinale horizontale. Plus précisément, la face frontale, respectivement 17a, 17b, des portions, respectivement 16a, 16b, ne sont pas coplanaires, dans un même plan vertical, la face 17a de la portion 16a de retenue étant plus proche de la ligne 12 d'extrémité aval que la portion 16b de positionnement.

Ainsi, dans le plan des figures 12 à 14 qui est vertical et parallèle à la direction horizontale longitudinale, la distance, dans la direction horizontale longitudinale entre la ligne 12 d'extrémité aval et la portion 16a de retenue correspond, à un jeu près, à une dimension dans la direction horizontale longitudinale de l'objet 7 mesurée entre un point sur le corps 21 et un point sur le col 22, opposé au point du corps par rapport à un axe central de la bouteille 19, de sorte que la bouteille 19 peut se loger entre la ligne 12 d'extrémité aval et la portion 16a du guide, au niveau de son col 22.

De même, dans le même plan que précédemment, la distance dans la direction horizontale longitudinale entre la ligne 12 d'extrémité aval et la portion 16b de positionnement correspond, à un jeu près, à une dimension dans la direction horizontale longitudinale de l'objet 7 mesurée entre deux points opposés, par rapport à l'axe central de la bouteille 19, sur le corps 21, de sorte que la bouteille 19 peut se loger entre la ligne 12 d'extrémité aval et la portion 16a du guide, au niveau de son corps 21.

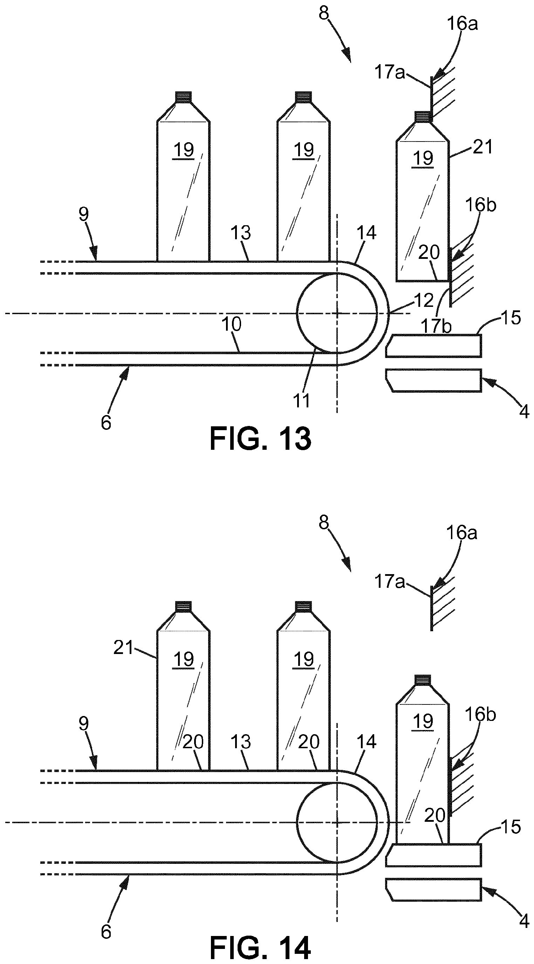

Ainsi, lors de l'étape de mise en contact (figure 12), le buvant 23 de la bouteille 19 vient en contact avec la face 17a frontale de la portion 16a de retenue. Puis, le corps 21 de la bouteille vient en appui sur la face 17b frontale de la portion 16b de positionnement lors du deuxième pivotement pour le stopper et mettre la bouteille 19 en position d'équilibre (figure 13) avant d'être reçue sur la surface 15 de réception (figure 14).

Bien entendu, la position du guide 16 et de ses portions 16a, 16b étant réglables, la configuration qui vient d'être décrite pourra être adaptée aux dimensions et à la forme des objets à transférer.

## Revendications

1. Procédé de transfert d'au moins un objet (**7**) depuis une surface (**9**) de convoyage d'un convoyeur (**6**) d'amenée vers une surface (**15**) de réception adjacente à une ligne (**12**) d'extrémité aval du convoyeur (**6**) d'amenée dans la direction de convoyage, la surface (**15**) de réception étant décalée de la surface (**9**) de convoyage vers le bas selon une direction verticale, le procédé comprenant les étapes suivantes :
- le convoyage de l'objet (**7**) dans une direction de convoyage, l'objet (**7**) comprenant une base (**7a**) qui repose sur la surface (**9**) de convoyage,
- la mise en contact de l'objet (**7**) avec un guide (**16**) placé dans la direction de convoyage à distance de la ligne (**12**) d'extrémité aval du convoyeur (**6**) d'amenée,
- l'abandon du contact entre la base (**7a**) de l'objet et la surface (**9**) de convoyage,
- la chute de l'objet (**7**) jusqu'à la surface (**15**) de réception,
l'étape d'abandon du contact entre la base (**7a**) de l'objet (**7**) et la surface (**9**) de convoyage n'ayant lieu qu'après l'étape de mise en contact de l'objet (**7**) avec le guide (**16**).

2. Procédé selon la revendication précédente, dans lequel pendant l'étape d'abandon du contact entre la base (**7a**) de l'objet et la surface (**9**) de convoyage et pendant l'étape de chute de l'objet (**7**) jusqu'à la surface (**15**) de réception, le contact entre l'objet (**7**) et le guide (**16**) est conservé.

3. Procédé selon la revendication 1 ou la revendication 2, comprenant une étape d'évacuation de l'objet (**7**) de la surface (**15**) de réception.

4. Procédé selon la revendication 3, dans lequel la surface (**15**) de réception est portée par un convoyeur (**4**) de sortie, le convoyeur de sortie (**4**) étant à l'arrêt lors de la réception de l'objet (**7**) sur la surface (**15**) de réception, puis étant en fonctionnement lors de l'évacuation de l'objet (**7**).

5. Procédé selon la revendication 3, dans lequel la surface (**15**) de réception est portée par un convoyeur (**4**) de sortie, le convoyeur (**4**) de sortie étant en fonctionnement lors de la réception de l'objet (**7**) sur la surface (**15**) de réception.

6. Procédé selon l'une des revendications 1 à 5, comprenant une étape de déstabilisation de l'objet (**7**) sur la surface (**9**) de convoyage avant l'étape de mise en contact avec le guide (**16**), le guide (**16**) étant placé de sorte que, lorsque l'objet (**7**) est mis en contact avec le guide (**16**), le guide (**16**) est au-dessus d'un centre (**G**) de gravité de l'objet (**7**).

7. Procédé selon l'une des revendications 1 à 6 pour le transfert d'une rangée (**18**) d'objets (**7**), la rangée (**18**) s'étendant dans une direction transversale, perpendiculaire à la direction de convoyage du convoyeur (**6**) d'amenée, les étapes du procédé étant effectuées simultanément pour tous les objets (**7**) de la rangée (**18**).

8. Procédé selon la revendication 7, dans lequel plusieurs rangées (**18**) sont disposées sur la surface (**9**) de convoyage du convoyeur (**6**) d'amenée, la distance entre les rangées (**18**) étant déterminée pour que l'étape de chute d'une rangée (**18**) d'objets (**7**) n'ait lieu qu'après une étape d'évacuation de la rangée (**18**) d'objets (**7**) précédemment transférée sur la surface (**15**) de réception.

9. Système (**8**) de transfert d'au moins un objet (**7**) depuis une surface (**9**) de convoyage sur une surface (**15**) de réception d'après le procédé selon l'une quelconque des revendications précédentes, le système (**8**) comprenant un convoyeur (**6**) d'amenée portant la surface (**9**) de convoyage, l'objet (**7**) reposant par une base (**7a**) sur la surface (**9**) de convoyage, la surface (**9**) de convoyage présentant une portion (**13**) principale qui s'étend dans une direction de convoyage, et une portion (**14**) inclinée, dans le prolongement en aval de la portion (**13**) principale dans la direction de convoyage, la portion (**14**) inclinée étant inclinée par rapport à la direction de convoyage, vers le bas selon une direction verticale, la surface (**15**) de réception étant adjacente selon la direction de convoyage à une ligne (**12**) d'extrémité aval du convoyeur (**6**) d'amenée, l'objet (**7**) reposant par sa base (**7a**) sur la surface (**15**) de réception,
- la surface (**15**) de réception étant décalée de la surface (**9**) de convoyage vers le bas selon la direction verticale,
et le système (**8**) de transfert comprenant :
- au moins un guide (**16**), situé à distance selon la direction de convoyage de la ligne (**12**) d'extrémité du convoyeur (**6**) d'amenée, la surface (**15**) de réception s'étendant alors au moins partiellement dans la direction longitudinale entre la ligne (**12**) d'extrémité et le guide (**16**),
- des moyens pour régler la distance entre le guide (**16**) et la ligne (**12**) d'extrémité aval du convoyeur (**6**) d'amenée et des moyens pour régler la position de la surface (**15**) de réception par rapport à la portion (**13**) principale de la surface (**9**) de convoyage de sorte que le système (**8**) de transfert est apte à mettre en oeuvre le procédé selon l'une quelconque des revendications 1 à 8.

10. Système (**8**) de transfert selon la revendication 9, dans lequel la surface (**15**) de réception est portée par un convoyeur (**4**) de sortie dont la direction de convoyage est perpendiculaire à la direction de convoyage du convoyeur (**6**) d'amenée.

11. Système (**8**) de transfert selon la revendication 9 ou la revendication 10, dans lequel le guide (**16**) comprend deux portions, une première portion (**16a**) dite de retenue étant située au-dessus du centre (**G**) de gravité de l'objet (**7**) lorsque l'objet (**7**) repose sur la surface (**9**) de convoyage et une deuxième portion (**16b**) dite de positionnement étant située plus près de la surface (**15**) de réception selon la direction verticale que la portion (**16a**) de retenue.

12. Système (**8**) de transfert selon l'une des revendications 9 à 11, dans lequel le convoyeur (**6**) d'amenée est apte à convoyer au moins une rangée (**18**) d'objets (**7**) s'étendant selon une direction transversale à la direction de convoyage, sur la surface (**15**) de réception, le guide (**16**) s'étendant alors dans la direction transversale, sur une dimension correspondant au moins à la longueur transversale de la au moins une rangée (**18**) d'objets.

13. Système (**8**) de transfert selon l'une des revendications 9 à 12, dans lequel le convoyeur (**6**) d'amenée est un convoyeur d'un accumulateur (**3**) entre un convoyeur (**2**) d'entrée convoyant des objets (**7**) en sortie d'une machine (**M1**) amont, et un convoyeur (**4**) de sortie convoyant des objets (**7**) jusqu'à l'entrée d'une machine (**M2**) aval.

14. Système (**8**) de transfert selon l'une des revendications 9 à 13, dans lequel le convoyeur (**6**) d'amenée est un convoyeur à bande (**10**) sans fin s'enroulant autour d'au moins un tambour (**11**) aval portant la ligne (**12**) d'extrémité aval du convoyeur (**6**) d'amenée.

## Patentansprüche

1. Verfahren zum Transportieren von mindestens einem Objekt (7) von einer fördernden Oberfläche (9) eines Zuführförderers (6) zu einer Empfangsfläche (15), die an eine Linie (12) am stromabwärtigen Ende des Zuführförderers (6) in Förderrichtung angrenzt, wobei die Empfangsfläche (15) gegenüber der fördernden Oberfläche (9) in vertikaler Richtung nach unten versetzt ist, wobei das Verfahren die folgenden Schritte umfasst:
- Fördern des Objektes (7) in einer Förderrichtung, wobei das Objekt (7) eine Basis (7a) umfasst, die auf der fördernden Oberfläche (9) ruht,
- Zusammenbringen des Objektes (7) mit einer Führung (16), die in Förderrichtung mit Abstand zu der Linie (12) am stromabwärtigen Ende des Zuführförderers (6) angeordnet ist,
- Lösen des Kontakts zwischen der Basis (7a) des Objektes und der fördernden Oberfläche (9),
- Fallen des Objektes (7) bis auf die Empfangsfläche (15),
wobei der Schritt des Lösens des Kontakts zwischen der Basis (7a) des Objektes (7) und der fördernden Oberfläche (9) erst nach dem Schritt des Zusammenbringens des Objektes (7) mit der Führung (16) stattfindet.

2. Verfahren nach dem vorangehenden Anspruch, wobei während des Schritts des Lösens des Kontakts zwischen der Basis (7a) des Objektes und der fördernden Oberfläche (9) und während des Schritts des Fallens des Objektes (7) bis auf die Empfangsfläche (15) der Kontakt zwischen dem Objekt (7) und der Führung (16) erhalten bleibt.

3. Verfahren nach Anspruch 1 oder Anspruch 2, umfassend einen Schritt des Entfernens des Objektes (7) von der Empfangsfläche (15).

4. Verfahren nach Anspruch 3, bei dem die Empfangsfläche (15) durch einen Ausgangsförderer (4) getragen wird, wobei der Ausgangsförderer (4) beim Empfangen des Objektes (7) auf der Empfangsfläche (15) still steht und dann beim Entfernen des Objektes (7) in Betrieb ist.

5. Verfahren nach Anspruch 3, bei dem die Empfangsfläche (15) durch einen Ausgangsförderer (4) getragen wird, wobei der Ausgangsförderer (4) beim Empfangen des Objektes (7) auf der Empfangsfläche (15) in Betrieb ist.

6. Verfahren nach einem der Ansprüche 1 bis 5, umfassend einen Schritt des Destabilisierens des Objektes (7) auf der fördernden Oberfläche (9) vor dem Schritt des Zusammenbringens mit der Führung (16), wobei die Führung (16) so angeordnet ist, dass, wenn das Objekt (7) mit der Führung (16) zusammengebracht ist, die Führung (16) sich oberhalb eines Schwerpunkts (G) des Objekts (7) befindet.

7. Verfahren nach einem der Ansprüche 1 bis 6 für den Transport einer Reihe (18) von Objekten (7), wobei sich die Reihe (18) in einer Querrichtung, senkrecht zur Förderrichtung des Zuführförderers (6) erstreckt und die Verfahrensschritte für alle Objekte (7) der Reihe (18) gleichzeitig ausgeführt werden.

8. Verfahren nach Anspruch 7, bei dem mehrere Reihen (18) auf der fördernden Oberfläche (9) des Zuführförderers (6) angeordnet sind, wobei der Abstand zwischen den Reihen (18) derart festgelegt wird, dass der Schritt des Fallens einer Reihe (18) von Objekten (7) erst nach einem Schritt des Entfernens der Reihe (18) von Objekten (7) stattfindet, die zuvor auf der Empfangsfläche (15) transportiert wurde.

9. System (8) zum Transportieren von mindestens einem Objekt (7) von einer fördernden Oberfläche (9) zu einer Empfangsfläche (15) nach dem Verfahren nach einem der vorangehenden Ansprüche, wobei das System (8) einen Zuführförderer (6) umfasst, der die fördernde Oberfläche (9) trägt, das Objekt (7) über eine Basis (7a) auf der fördernden Oberfläche (9) ruht, die fördernde Oberfläche (9) einen Hauptabschnitt (13), der sich in eine Förderrichtung erstreckt, und in stromabwärtiger Verlängerung des Hauptabschnitts (13) in Förderrichtung einen geneigten Abschnitt (14) aufweist, wobei der geneigte Abschnitt (14) in vertikaler Richtung nach unten geneigt zur Förderrichtung ist, die Empfangsfläche (15) in Förderrichtung an eine Linie (12) am stromabwärtigen Ende des Zuführförderers (6) angrenzt und das Objekt (7) über seine Basis (7a) auf der Empfangsfläche (15) ruht,
- wobei die Empfangsfläche (15) gegenüber der fördernden Oberfläche (9) in vertikaler Richtung nach unten versetzt ist,
und wobei das System (8) zum Transportieren Folgendes umfasst:
- zumindest eine Führung (16), die beabstandet in Förderrichtung der Linie (12) am Ende des Zuführförderers (6) angeordnet ist, wobei die Empfangsfläche (15) sich zumindest teilweise in Längsrichtung zwischen der Linie (12) am Ende und der Führung (16) erstreckt,
- Mittel zum Einstellen des Abstands zwischen der Führung (16) und der Linie (12) am stromabwärtigen Ende des Zuführförderers (6) und Mittel zum Einstellen der Position der Empfangsfläche (15) bezüglich des Hauptabschnitts (13) der fördernden Oberfläche (9), derart, dass das System (8) zum Transportieren dazu geeignet ist, das Verfahren nach einem der Ansprüche 1 bis 8 auszuführen.

10. System (8) zum Transportieren nach Anspruch 9, wobei die Empfangsfläche (15) durch einen Ausgangsförderer (4) getragen wird, dessen Förderrichtung senkrecht zu der Förderrichtung des Zuführförderers (6) verläuft.

11. System (8) zum Transportieren nach Anspruch 9 oder Anspruch 10, wobei die Führung (16) zwei Abschnitte umfasst, einen ersten sogenannten Halteabschnitt (16a), der oberhalb des Schwerpunkts (G) des Objekts (7) angeordnet ist, wenn das Objekt (7) auf der fördernden Oberfläche (9) ruht, und einen zweiten sogenannten Positionierungsabschnitt (16b), der in vertikaler Richtung näher zu der Empfangsfläche (15) angeordnet ist als der Halteabschnitt (16a).

12. System (8) zum Transportieren nach einem der Ansprüche 9 bis 11, wobei der Zuführförderer (6) geeignet ist, auf der Empfangsfläche (15) mindestens eine Reihe (18) von Objekten (7) zu befördern, die sich in eine Richtung quer zur Förderrichtung erstreckt, während die Führung (16) sich in Querrichtung erstreckt, mit einem Maß, das zumindest der Querlänge der mindestens einen Reihe (18) von Objekten entspricht.

13. System (8) zum Transportieren nach einem der Ansprüche 9 bis 12, wobei es sich bei dem Zuführförderer (6) um einen Stauförderer (3) zwischen einem Eingangsförderer (2), der die Objekte (7) am Ausgang einer vorgelagerten Maschine (M1) befördert, und einem Ausgangsförderer (4), der die Objekte (7) bis zum Eingang einer nachgelagerten Maschine (M2) befördert, handelt.

14. System (8) zum Transportieren nach einem der Ansprüche 9 bis 13, wobei es sich bei dem Zuführförderer (6) um einen endlosen Bandförderer (10) handelt, der um zumindest eine nachgelagerte Walze (11) läuft, die die Linie (12) am stromabwärtigen Ende des Zuführförderers (6) trägt.

## Claims

1. Method for transferring at least one object (7) from a conveying surface (9) of a supply conveyor (6) to a receiving surface (15) that is adjacent to a downstream end line (12) of the supply conveyor (6) in the direction of conveying, the receiving surface (15) being offset from the conveying surface (9) downward in a vertical direction, the method comprising the following steps:
- the conveying of the object (7) in a direction of conveying, the object (7) comprising a base (7a) that rests on the conveying surface (9),
- putting the object (7) into contact with a guide (16) placed in the direction of conveying at a distance from the downstream end line (12) of the supply conveyor (6),
- ending the contact between the base (7a) of the object and the conveying surface (9),
- dropping the object (7) onto the receiving surface (15),
the step for ending the contact between the base (7a) of the object (7) and the conveying surface (9) taking place only after the step of putting the object (7) into contact with the guide (16).

2. Method according to the preceding claim, in which during the step for ending the contact between the base (7a) of the object and the conveying surface (9) and during the step of dropping the object (7) onto the receiving surface (15), the contact between the object (7) and the guide (16) is maintained.

3. Method according to Claim 1 or Claim 2, comprising a step for removing the object (7) from the receiving surface (15).

4. Method according to Claim 3, in which the receiving surface (15) is carried by an output conveyor (4), the output conveyor (4) being stopped when the object (7) is received on the receiving surface (15), then being in operation during the removal of the object (7).

5. Method according to Claim 3, in which the receiving surface (15) is carried by an output conveyor (4), the output conveyor (4) being in operation when the object (7) is received on the receiving surface (15).

6. Method according to one of Claims 1 to 5, comprising a step for destabilizing the object (7) on the conveying surface (9) before the step for ensuring contact with the guide (16), the guide (16) being placed so that when the object (7) is put into contact with the guide (16), the guide (16) is above a center of gravity (G) of the object (7).

7. Method according to one of Claims 1 to 6 for the transferring of a row (18) of objects (7), the row (18) extending in a transverse direction, perpendicular to the direction of conveying of the supply conveyor (6), the steps of the method being performed simultaneously for all of the objects (7) of the row (18).

8. Method according to Claim 7, wherein several rows (18) are placed on the conveying surface (9) of the supply conveyor (6), the distance between the rows (18) being determined so that the step for dropping a row (18) of objects (7) takes place only after a step for removal of the row (18) of objects (7) previously transferred onto the receiving surface (15).

9. System (8) for transferring at least one object (7) from a conveying surface (9) onto a receiving surface (15) according to the method according to any of the preceding claims, the system (8) comprising a supply conveyor (6) carrying the conveying surface (9), the object (7) resting by a base (7a) on the conveying surface (9), the conveying surface (9) having a main portion (13) that extends in a direction of conveying, and an inclined portion (14), in the extension downstream from the main portion (13) in the direction of conveying, the inclined portion (14) being inclined in relation to the direction of conveying, downward in a vertical direction, the receiving surface (15) being adjacent in the conveying direction to a downstream end line (12) of the supply conveyor (6), the object (7) resting by its base (7a) on the receiving surface (15), the receiving surface (15) being offset from the conveying surface (9) downward in the vertical direction, and the transferring system (8) comprising:
- at least one guide (16), located at a distance in the direction of conveying from the end line (12) of the supply conveyor (6), the receiving surface (15) then extending at least partially in the longitudinal direction between the end line (12) and the guide (16),
- means for adjusting the distance between the guide (16) and the downstream end line (12) of the supply conveyor (6) and means for adjusting the position of the receiving surface (15) in relation to the main portion (13) of the conveying surface (9) so that the transferring system (8) is able to implement the method according to any one of Claims 1 to 8.

10. Transferring system (8) according to Claim 9, wherein the receiving surface (15) is carried by an output conveyor (4) whose direction of conveying is perpendicular to the direction of conveying of the supply conveyor (6).

11. Transferring system (8) according to Claim 9 or Claim 10, wherein the guide (16) comprises two portions, a first so-called retaining portion (16a) being located above the center of gravity (G) of the object (7) when the object (7) rests on the conveying surface (9) and a second so-called positioning portion (16b) being located closer to the receiving surface (15) in the vertical direction than the retaining portion (16a).

12. Transferring system (8) according to one of Claims 9 to 11, wherein the supply conveyor (6) is able to convey at least one row (18) of objects (7), which extends in a transverse direction to the direction of conveying, onto the receiving surface (15), the guide (16) then extending in the transverse direction, over a dimension corresponding at least to the transverse length of the at least one row (18) of objects.

13. Transferring system (8) according to one of Claims 9 to 12, wherein the supply conveyor (6) is a conveyor of an accumulator (3) between an input conveyor (2) conveying objects (7) at the output of an upstream machine (M1), and an output conveyor (4) conveying objects (7) up to the input of a downstream machine (M2).

14. Transferring system (8) according to one of Claims 9 to 13, wherein the supply conveyor (6) is an endless belt conveyor (10) that is wound around at least one downstream drum (11) carrying the downstream end line (12) of the supply conveyor (6).
